# EUROPEAN PATENT APPLICATION

(11) **EP 1 031 675 A2**
(43) Date of publication of application: **30.08.2000**
(21) Application number: 99120688.9
(22) Date of filing: 19.10.1999
(51) Int. Cl.: E04C 3/32, E04H 12/08

(54) **Section bar for support columns for cantilever roofs and similar covering means, and for different uses**

(30) Priority: 23.02.1999 IT PN990023
(71) Applicant: Metalco S.p.A., 31020 Castelminio di Resana (TV) (IT)
(72) Inventor: Tasca, Alfredo, Castelfranco Veneto (TV) (IT)
(74) Representative: Dalla Rosa, Adriano

(57) **Abstract**

Section bar for support columns for shelter roofings and similar coverings, as well as for other uses, comprising an internally hollow vertical column (11), at least a removable head cap (13) adapted to be applied on top of said column (11), and at least a lower base (15) adapted to be applied on to the lower portion of said column (11) so as to enable said column section bar to rest thereupon and be fixed to the ground. The column (11) is constituted by the assembly of at least an inner pole (18) adapted to be fixed to the ground, and at least a shaped enclosing structure (19) arranged and fixed concentrically around said inner pole (18) and provided with coupling means (25, 30; 34) adapted to enable component parts of various kinds to be removably joined together in different positions and arrangements in view of building structures for various applications.

## Description

The present invention refers to a section bar for support columns for cantilever roofs and similar covering means, as well as for various uses, which is so shaped as to be able to be simply and quickly adapted to the various applications.

Profiled columns used to support pre-fabricated roofings of various kind, as well as in various other applications, are largely known in the art. These are generally installed in an upright position and joined to the various parts forming each structure to be assembled, for instance with walls made of some metal or plastic material, usually by means of fastening and/or welding systems of a traditional type, which requires performing a number of complicated and expensive operations, thereby obtaining fixed structures that do not lend themselves to being subsequently disassembled and converted into structures of some other kind.

It therefore would be desirable, and it is actually a purpose of the present invention, to provide a profiled support column that is so shaped as to be capable of being easily and quickly assembled, with just a few simple operations, with further component parts and materials so as to form roofing structures of various kind, or even structures intended for other uses, which are then capable of being possibly converted into structures of a different kind.

Such a column section bar is provided with the features as substantially described with particular reference to the appended claims.

Anyway, the invention will be more readily understood from the description which is given below by way of non-limiting example with reference to the accompanying drawings, in which:
- Figure 1 is an elevational view of a column section bar according to the present invention;
- Figure 2 is a plan view of the column section bar of Figure 1, as cross-sectioned along the A-A line;
- Figure 3 is a plan cross-sectional view of the column section bar of Figure 2, with a portion of wall assembled thereto;
- Figure 4 is a plan cross-sectional view of an enlarged detail of the column section bar of Figure 3;
- Figure 5 is a plan view of the column section bar of Figure 1, as cross-sectioned along the B-B line and with a portion of wall assembled thereto;
- Figure 6 is a cross-sectional elevational view of a construction detail of the column section bar of Figure 1;
- Figure 7 is a plan view of the construction detail of Figure 6, as cross-sectioned along the C-C line;
- Figure 8 is a plan cross-sectional view of an enlarged detail of Figure 7;
- Figure 9 is an elevational view of a further construction detail of the column section bar of Figure 1;
- Figure 10 is a plan view of the construction detail of Figure 9;
- Figure 11 is a cross-sectional elevational view of the further construction detail of the column section bar of Figure 9;
- Figure 12 is a plan view of the further construction detail of the column section bar of Figure 11, as cross-sectioned along the D-D line;
- Figure 13 is an elevational view of a type of sheltering construction in which column section bars according to the present invention are installed;
- Figure 14 is a side view of the construction of Figure 13;
- Figure 15 is a side view of another type of sheltering construction comprising column section bars according to the present invention;
- Figure 16 is a side view of the construction of Figure 15;
- Figure 17 is an elevational view of another type of sheltering construction constituted by column section bars according to the present invention;
- Figure 18 is a side view of the construction of Figure 17;
- Figures 19 and 20 are a schematical side and elevational view, resp., of a further type of sheltering construction formed by column section bars according to the present invention;
- Figures 21 and 22 are a schematical side and elevational view, resp., of yet another type of sheltering construction formed by column section bars according to the present invention;
- Figures 23 and 24 are a schematical side and elevational view, resp., of yet another type of sheltering construction formed by column section bars according to the present invention;
- Figures 25 and 26 are a schematical side and elevational view, resp., of yet another type of sheltering construction formed by column section bars according to the present invention;
- Figure 27 is an elevational view of another application of the column section bars according to the present invention;
- Figure 28 is a side view of another application of the column section bars according to the present invention;
- Figure 29 is an elevational view of a further application of the column section bars according to the present invention;
- Figure 30 is an elevational view of a number of component parts like the one shown in Figure 29;
- Figure 31 is an elevational view of yet another application of the column section bars according to the present invention;
- Figure 32 is an elevational view of a number of component parts like the one shown in Figure 31;
- Figure 33 is an elevational view of a further application with upright elements formed by column section bars according to the present invention;
- Figure 34 is an elevational view of a further application incorporating column section bars according to the present invention;
- Figure 35 is a plan view of the application of Figure 34;
- Figure 36 is an elevational view of another application incorporating column section bars to the present invention; and
- Figure 37 is a plan view of the application of Figure 36.

In the above listed Figures, a modular-type column section bar 10 is generally illustrated, which is adapted to be used both to support pre-fabricated roofings of various kind for sheltering from rainfalls and atmospheric precipitations in general (snow, hail and the like), such as for instance cantilever roofs, shelters, sheds, canopies, tunnels and the like, and in various other applications, such as for instance support members for road signs, advertising signs, waste collecting baskets and other town and road fitting items, dissuaders aimed at impeding the access of motor vehicles and/or motorcycles into pedestrian precincts, and the like, wherein said column section bar is to this purpose adapted to be repeatedly assembled and dissassembled from a type of structure to another one without requiring the use of any kind of rigid fastening means and/or weldings whatsoever.

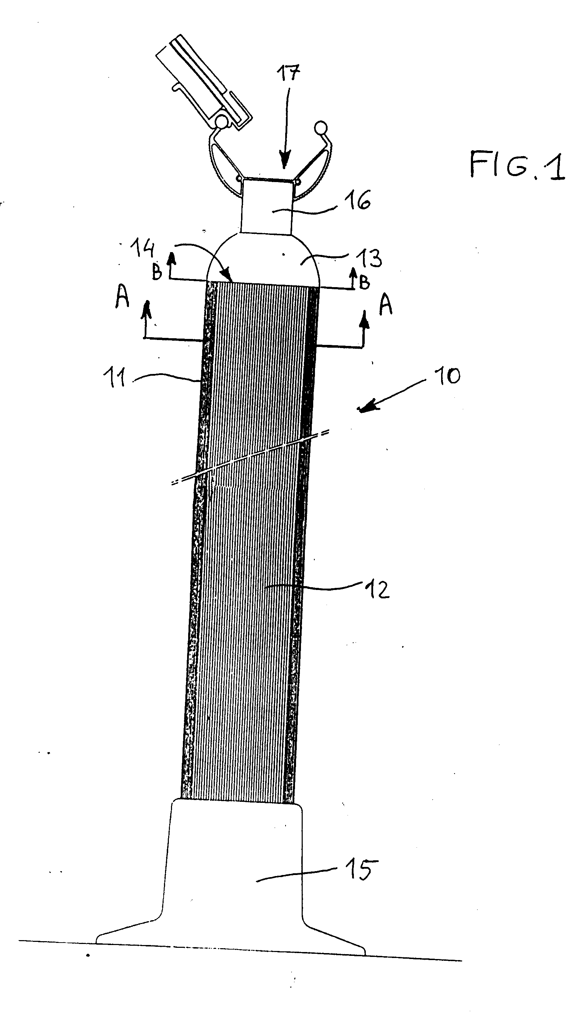

With particular reference to Figure 1, which illustrates such a metal column section bar 10, it can be noticed that the latter is essentially formed by an internally hollow, cylindrically shaped vertical column 11 having the desired height according to the intended application, which is provided with a corrugated outer surface 12 all over its circumference, a removable cap 13, which is adapted to be applied on to the corresponding open upper head 14 of said column, and a lower base 15 enabling the column section bar itself to rest on and be fastened to the ground in the required installation position thereof.

In the considered Figure, the head cap 13 can be noticed to be perforated centrally on top in order to enable an elongated vertical member 16 to be attached thereto so as to be capable of sustaining a gutter 17 for collecting and disposing rain water, as well as atmospheric precipitations of various kind, such gutter being generally suitably attached against the perimetral sides of sheltering constructions of the most various kinds and being further described in detail in a separate patent application filed by the same Applicant. It will however be appreciated that such a head cap may also not be provided with such an elongated member 16, depending on the intended application.

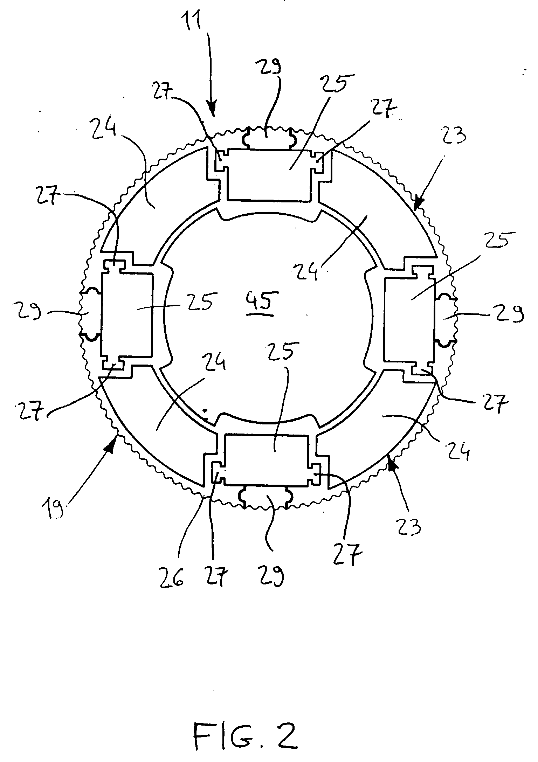

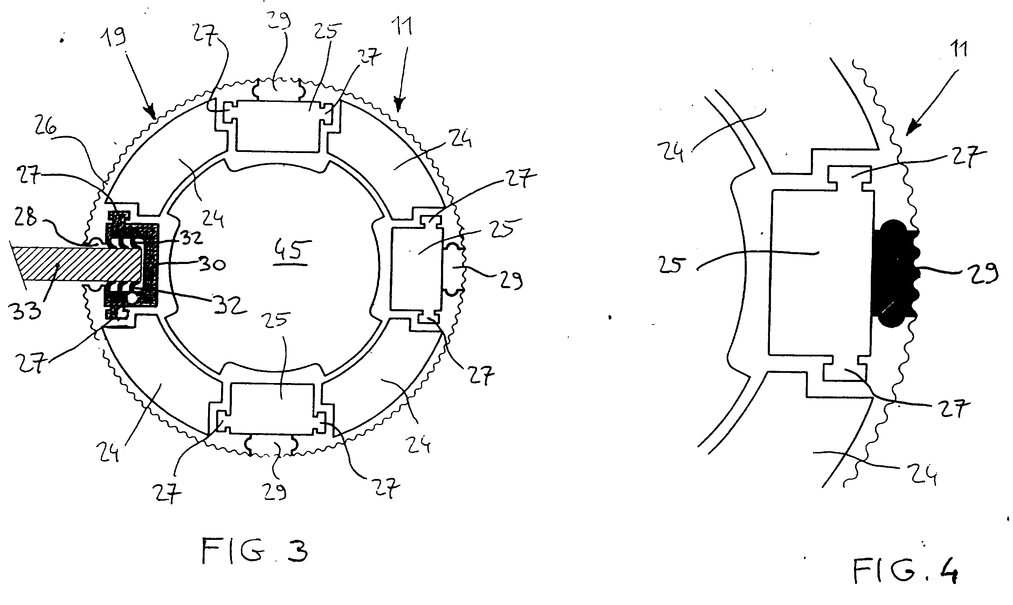

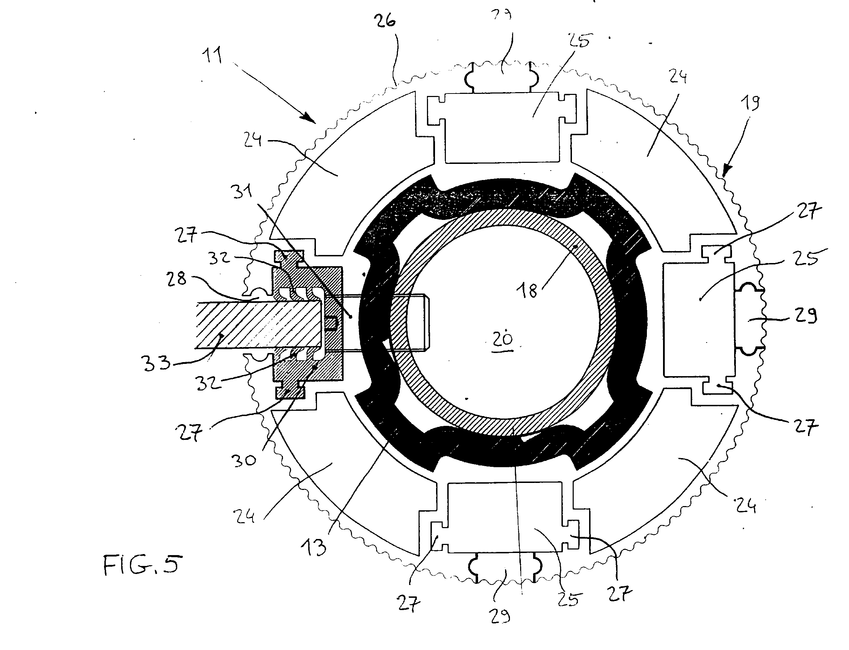

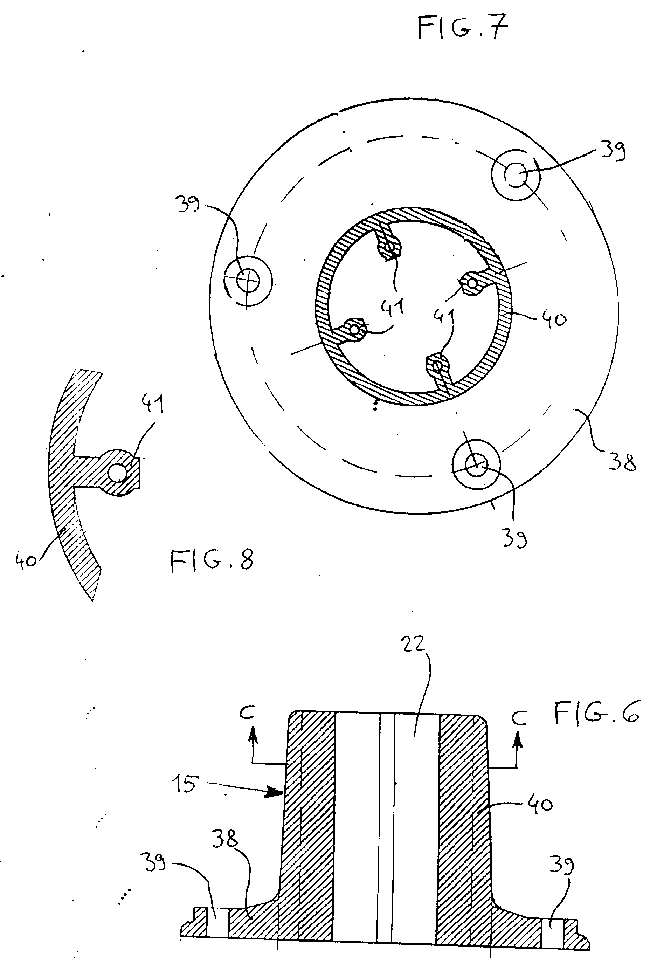

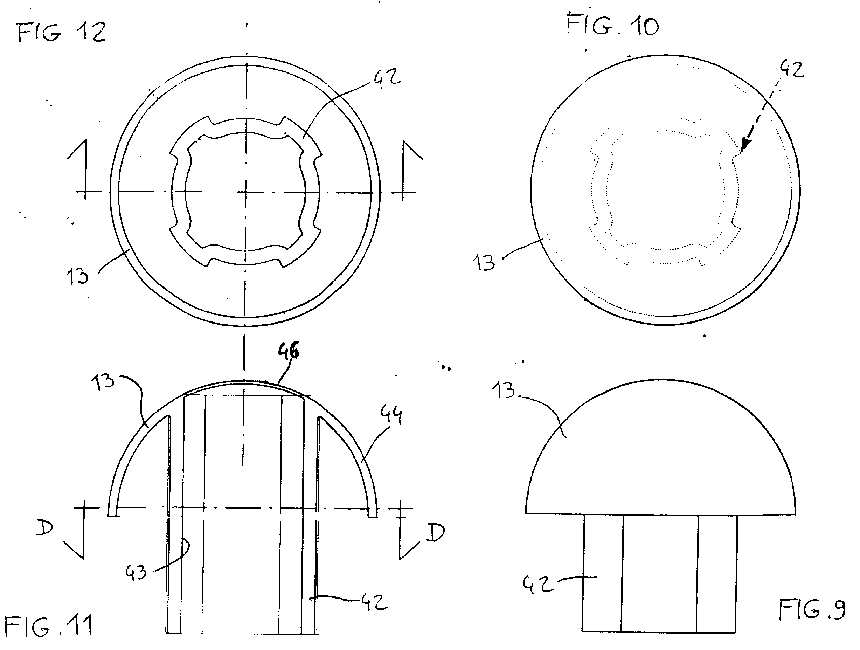

Referring now to Figures 2 to 5, in which the vertical column 11 is illustrated, the latter can be noticed to essentially consists of the assembly formed by at least an inner metal pole 18 of a tubular or polygonal shape (Figure 5), which forms the vertically extending support of the column section bar 10, and a shaped enclosing structure 19 which is sized to larger dimensions than the inner pole 18 and is arranged and fixed concentrically around the same pole. In particular, such an inner pole 18 is provided with an inner cavity 20 reaching all along the extension thereof, in the upper extremity of which the head cap 13 is inserted, and the lower extremity 21 of which is inserted, and suitably fastended, in a corresponding axial through-aperture 22 provided in the lower base 15 (see Figure 6) and extends downwards beyond the latter for a determined extent so as to be able to be driven into the ground, in the desired position and site of installation, to such a depth as required to keep and sustain the entire column section bar in its vertically erected position.

Such an inner pole 18, further to acting as a support for the entire column section bar 10, is also used for enabling the further component parts used to form the various constructions being implemented to be assembled and fastened thereto. To this purpose it is advantageously provided with perforations that are appropriately distributed all along its circumference and its height so as to enable said component parts to be assembled and fastened gainst such a pole in various positions and arrangements, as this will be described in greater detail further on.

In Figure 2, which particularly illustrates the shape of said enclosing structure 19, the latter can be noticed to essentially comprise an outer covering 23 enclosing the inner pole 18 and formed by thick walls of a heavy metal material and shaped in the form of a series of circular sectors 24 equally spaced from each other along the entire periphery of the vertical column 11, thereby defining a series of profiled cavities 25 with similar cross-section areas between one of said circular sectors 24 and the next one. In the example considered here there are provided four of such circular sectors 24 equally spaced angularly from each other and separated from each other by four corresponding profiled cavities 25 angularly orthogonal to each other. It will however be appreciated that the number and the arrangement of said circular sectors and shaped cavities may of course vary without departing from the scope of the present invention.

Finally, the outer covering 23 is covered over its entire extension by a thin peripheral wall 26 featuring a corrugated outer surface, which is suitably fixed against said circular sectors 24 and the profiled cavities 25.

In the example described here, each profiled cavity 25 is in turn shaped to feature a quadrangularly shaped contour with two T-shaped side protrusions 27, and is accessible through a front aperture 28 that is narrower than the cavity itself and extends throughout the height of the column 11, wherein a corresponding piece of closing wall 29, which also has a corrugated outer surface and sits flush with the remaining corrugated outer surface of the column 11, is inserted in such an aperture,

A corresponding profiled frame 30, forming a sealing gasket of an appropriate material, eg. rubber, is capable of being removably snap-fitted in each such profiled cavity 25 after having first removed the related piece of closing wall 29 therefrom, wherein such a frame is fixed against the inner pole 18 by means of screws, bolts or similar fastening means 31 either passing through corresponding holes (not shown) provided in the same frame and the inner pole or appropriately tightened against the outer surface of said pole, said profiled frame being grooved and provided with elastically pliable borders 32 adapted to accomodate between them at least a component part of the sheltering construction to be implemented, such as for instance a partition wall of glass, plastics or some other clear material 33, so that each component part can so be mounted in a sealed, ie. water-tight manner in the profiled frame 30, while being supported by the column section bar according to the present invention.

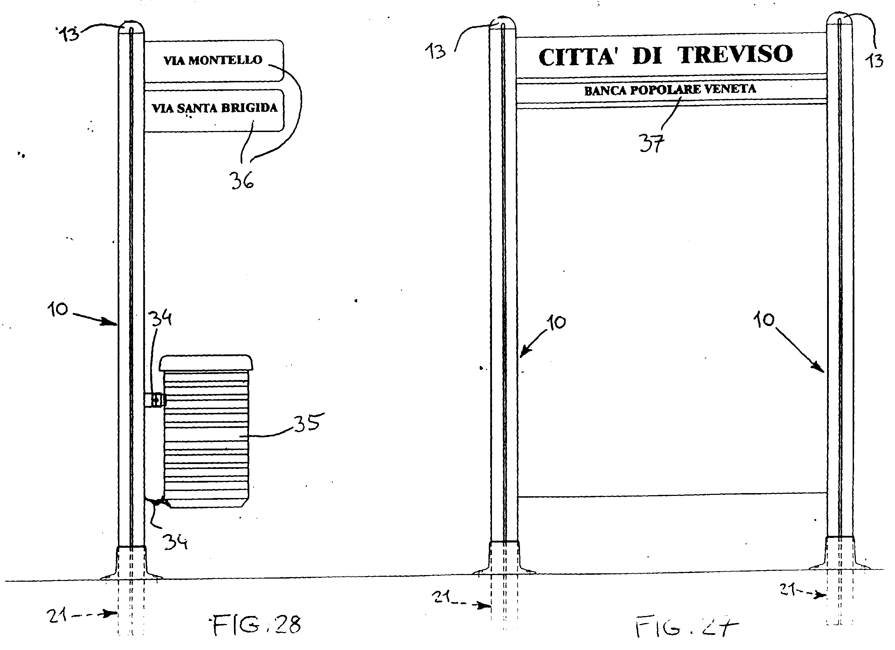

In this way, it becomes possible for the column section bar to be used in and for the most varied applications by just removing each time the closing walls pieces 29 as required for the insertion of the profiled frames 30 needed to accomodate the various component parts of the sheltering constructions that have to be built, or the insertion, instead of said profiled frames, of corresponding profiled support members 34 without sealing gasket in the case that the application requires a support function for various items, such as for instance waste collection baskets 35 and/or road signs 36 (see Figure 28), or advertising placards 37 (see Figure 27).

Figures 6 to 8 can now be noticed to schematically illustrate a lower resting base 15 of the column section bar according to the present invention, wherein it can again be noticed that it is constituted by a bottom block 38 having an enlarged and flattened circular or polygonal shape, provided with through-holes 39 for the insertion of bolts, tie-rods or other means for fastening the entire column section bar on to the ground, as well as a vertical bush 40, integral with said bottom block 40, of which it has essentially the same shape, but a smaller size, which extends upwards and is crossed axially by said central through-hole 22, in which there are provided inner protrusions 41 equally spaced from each other and adapted to snap into corresponding profiled cavities (not shown) of the inner pole 18 that is inserted into said through-hole and stuck to a certain depth into the ground, thereby sustaining the same pole.

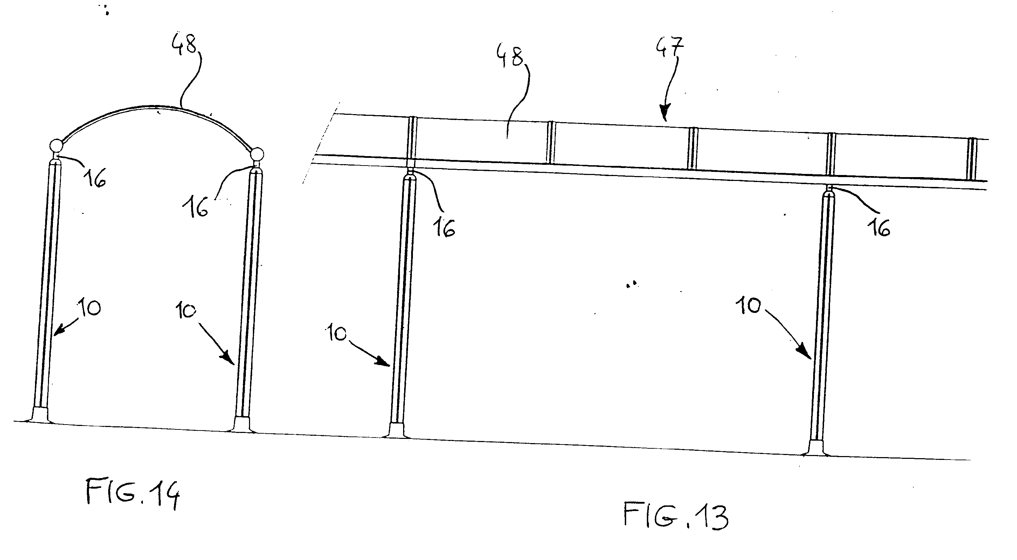

Figures 9 to 12 can now be seen to illustrate a head cap 13, which is constituted essentially by a short lower stem 42, in which there is provided an axial blind hole 43, and a thin enlarged upper part 4 in the shape of a spherical cap, joined to said stem, wherein said stem is conformed to feature an outer profile that is adaptable to be removably inserted in the free inner space 45 of the vertical column 11, as defined between the various circular sectors 24 and profiled cavities 25 of the same column, and wherein said upper enlarged part is made thinner in its central top portion 46 coinciding with said blind hole 43, in such a manner as to make it possible for said head cap to be used as a terminal piece of the column section bar, without any need for the top portion 46 thereof to be perforated, such as for instance in the case of the head cap illustrated in Figures 8 and 28, or as a support and fastening member for an elongated vertical piece 16, by having in this case the top portion 46 of the same head cap perforated, thereby converting the blind hole 43 into a through-hole for the insertion of said elongated piece therethrough. Examples of this particular version of the head cap can be inferred from the illustrations in Figures 13, 14, 15, 16, etc.

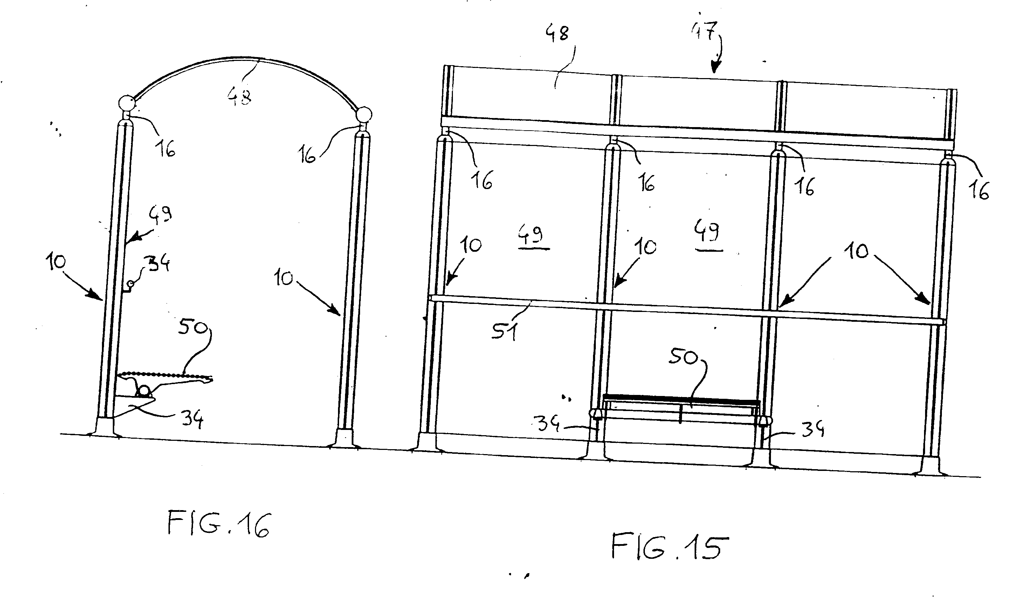

Figures 13 and 14 illustrate the case of a tunnel or sheltered passage 47 for the connection of various buildings or pre-fabricated constructions with each other, comprising a double row of column section bars that are aligned with each other and sustain, with respective elongated pieces 16, laterally open, clear curved coverings 48.

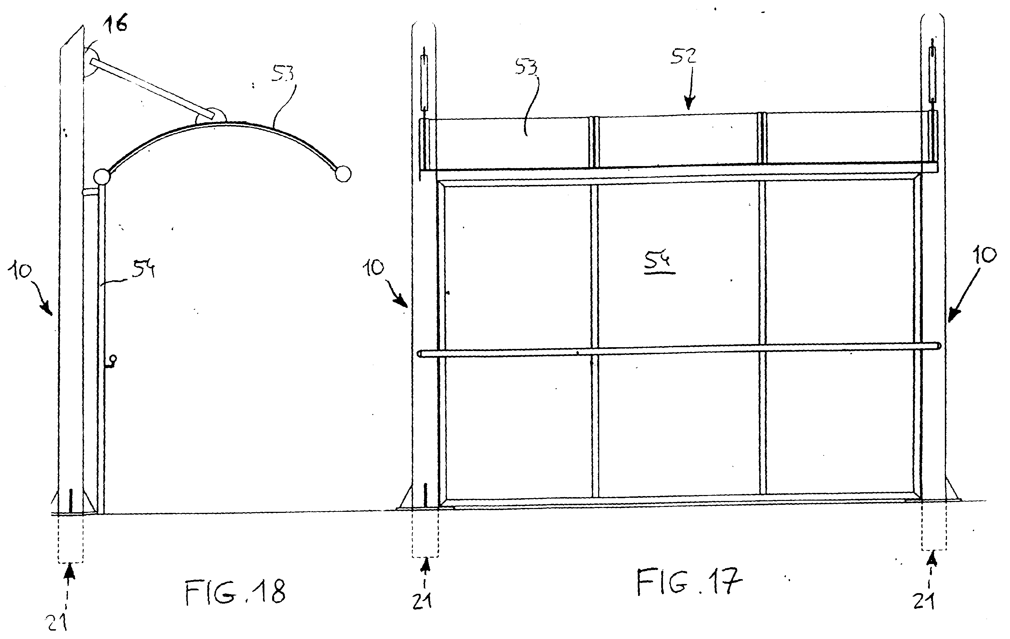

Figures 15 and 16 illustrate the same tunnel or sheltered connecting passage 47 shown in Figures 13 and 14, in which there is provided at least a clear lateral wall 49 joined with the curved covering 48, and against which there are fixed, through respective profiled support pieces 34, a bench 50 and a horizontal lath 51 for hanging items thereon.

Figures 17 and 18 illustrate a sheltering roof or canopy 52 for use at bus stops or similar places. with column section bars sustaining, in a cantilever-type construction, a clear curved covering 53 joined to a clear lateral wall 54, again through the use of elongated pieces 16.

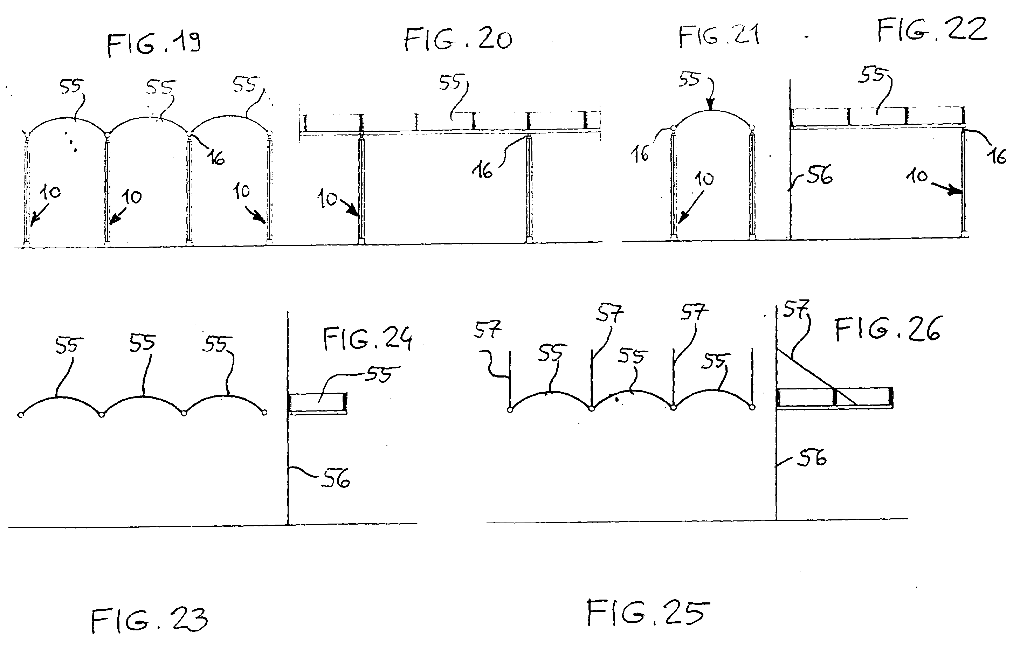

Figures 19 through to 26 schematically illustrate further versions of sheltering constructions sustained by column section bars according to the present invention, with the use of elongated pieces 16.

In the illustrations appearing in Figures 19 and 20, these sheltering constructions are formed by a series (three) of curved coverings 55 that are joined side by side with each other ; in Figures 21 and 22 they are formed by a curved covering 55 sustained by a pair of column section bars at an extremity thereof and a common wall 56 at the other extremity thereof, in Figures 23 to 26 they can be noticed to be again formed by a series (three) of curved coverings 55, but without column section bars which are embedded in a common wall 56 in the case of Figures 23 and 24, and are further sustained in a cantilever manner by said common wall 56 by means of tie-rods 57.

Figures 27 through to 37 illustrate further possible applications of the column section bars according to the present invention.

In the examples illustrated in Figures 28 and 27 it can be noticed that use is made of two column section bars, without any use of elongated pieces 16 and applying unperforated top head caps 13 instead of said pieces, in the first case in order to sustain a waste collection basket 35 on the lower side, by means of profiled support pieces 34, and road signs 36 on the upper side, which are inserted directly in the profiled cavities of the column, and in the second case in order to sustain, on the upper side, advertising placards 37 that are inserted directly in the profiled cavities of the columns.

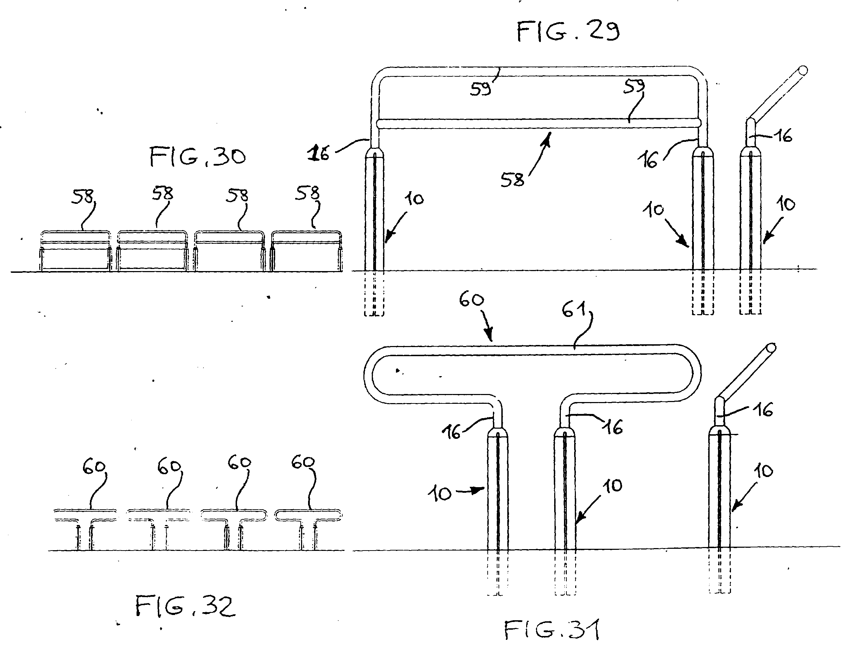

Figures 29 through to 37 illustrate various types of so-called dissuaders, as used to enable pedestrian precincts, gardens, parks and the like to be acceded to selectively, ie. by people only, while impeding entrance to motor vehicles or even cycles, and making use of column incorporating elongated pieces 16.

Figure 29 can be noticed to illustrate a dissuader 58 installed at the entrance of a restricted-access zone, formed by two column section bars placed at a distance from each other, the elongated pieces 16 of which are joined together by means of horizontal and rectilinear bars 59 impeding the access, and a further column section bar that is displaced with respect to the other two by such an interval as to just allow for people being able to pass therethrough.

Figure 30 can be noticed to ilustrate a series of identical dissuaders 58 which are slightly modified with respect to those shown in Figure 29 and are used in different positions along the periphery of restricted-access areas.

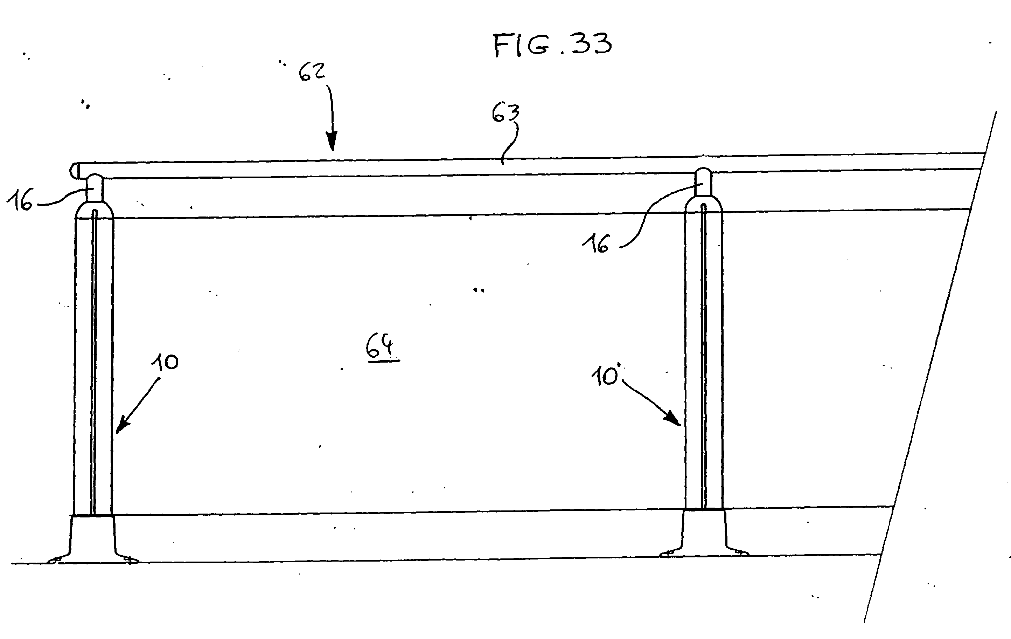

Figure 31 illustrates another type of dissuader 60 intended for the same applications as the above cited ones, formed by two column section bars placed close to each other, and a bent horizontal bar 61 joined with the elongated pieces 16.

Figure 32 illustrates in turn a series of dissuaders 60 similar to the one shown in Figure 31, which are again installed in different peripheral positions of each restricted-access area.

Figure 33 can be noticed to illustrate a further type of dissuader 62 used to fence in restricted-access areas, roadsides or the like, and formed again by column section bars regularly spaced from each other and joined by means related elongated pieces 16 with elongated horizontal bars 63, as well as covered by lateral guarding walls 64.

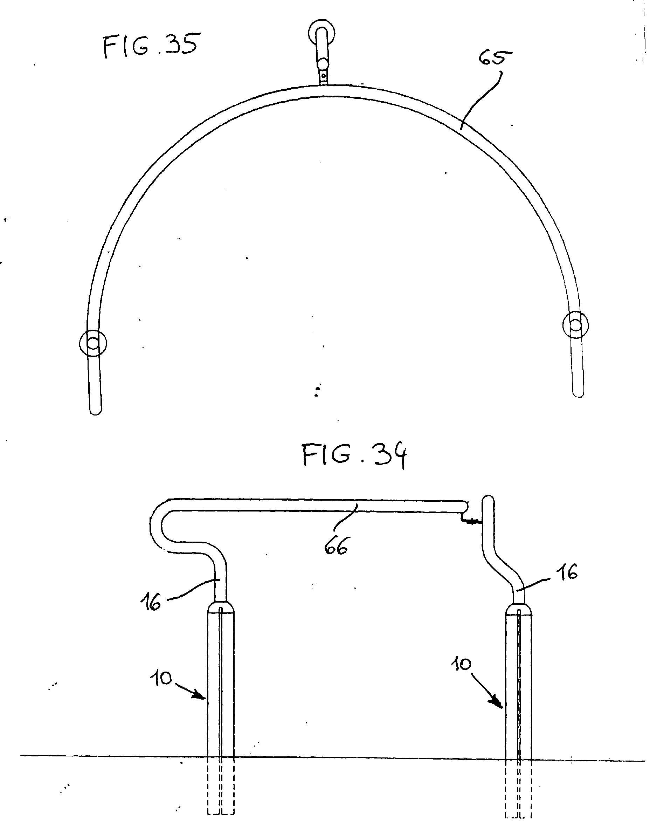

Finally, Figures 34 to 37 illustrate two further types of dissuaders used to restrict the entrance into limited-access areas.

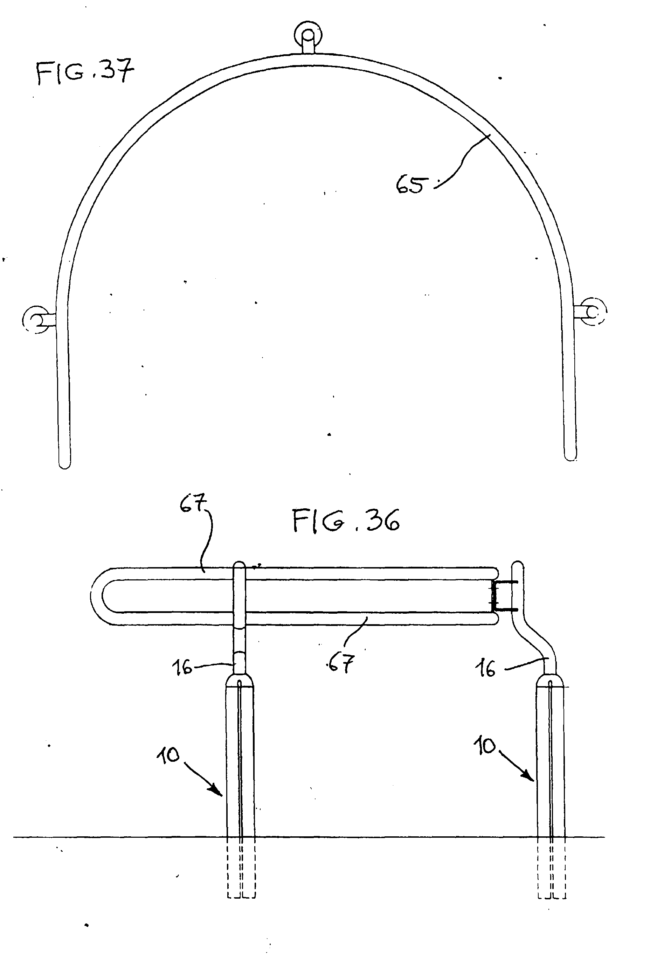

The entrance is in both cases delimited by a dissuader formed by an elongated bar of a semi-circular shape 65 (see Figures 35 and 37), which is joined to corresponding column section bars through elongated pieces 16, and a dissuader placed slightly apart from said elongated bar, so as to solely enable persons to enter therethrough, and formed by a column section bar joined to a folded rectilinear bar 66 through the elongated piece 16 in the case represented in Figure 34, and by a column section bar joined with a doubly folded bar constituting two parallel rectilinear portions 67, overlapping each other and extending close to each other, in the case represented in Figure 36.

## Claims

1. Section bar for support columns for shelter roofings and similar coverings, as well as for other uses, **characterized in that** it comprises an internally hollow vertical column (11), at least a removable head cap (13) adapted to be applied on top of said column (11), and at least a lower base (15) adapted to be applied on to the lower portion of said column (11) so as to enable said column section bar to rest thereupon and be fixed to the ground, said column (11) being in turn constituted by the assembly of at least an inner pole (18) adapted to be fixed to the ground, and at least a shaped enclosing structure (19) arranged and fixed concentrically around said inner pole (18) and provided with coupling means (25, 30; 34) adapted to enable component parts of various kinds to be removably joined together in different positions and arrangements in view of building structures for various applications.

2. Section bar for support columns according to claim 1, **characterized in that** said vertical column (11) has a corrugated outer configuration and extends up to the desired height of use, and is further provided with open upper haed (14) for the insertion of said head cap (13).

3. Section bar for support columns according to claim 2, **characterized in that** said head cap (13) is constituted by a short lower stem (42) provided with an axial blind hole (43), and a thin enlarged upper part (44) in the shape of a spherical cap, joined to said stem (42) and made thinner in its upper central portion (46) coinciding with said blind hole (43) so as to be able to perforate it and obtain a through-hole for at least an elongated piece (16) to be inserted thereinto, said stem (42) being conformed with an outer contour that is capable of being removably fitted into the inner free space (45) of said vertical column (11).

4. Section bar for support columns according to claim 3, **characterized in that** said lower base (15) is constituted by a bottom block (38) having an enlarged and flattened circular or polygonal shape and provided with through-holes (39) for the insertion of bolts, tie-rods or similar means for ground attachment, and a vertical bush (40) secured to said block (38), of which it has the same shape, but a smaller size, extending upwards and crossed axially by at least a central through-hole (22)in which said inner pole (18) is inserted and then stuck into the ground.

5. Section bar for support columns according to claim 4, **characterized in that** said inner pole (18) is provided with an internal cavity (20) extending over the entire extension thereof, in the upper extremity of which the stem (42) of said head cap (13) is inserted.

6. Section bar for support columns according to claim 5, **characterized in that** said shaped enclosing structure (19) is constituted by an outer enclosure (23) enclosing said inner pole (18) and formed by thick walls of a heavy material, formed with a series of circular sectors (24) that are equally spaced from each other along the entire periphery of said vertical column (11), said outer enclosure (23) being covered over its full extension by a thin peripheral wall (26) having a corrugated outer surface.

7. Section bar for support columns according to claim 6, **characterized in that** said coupling means comprise a series of profiled cavities (25) arranged between said circular sectors (24) and profiled frames (30) or profiled support members (34) capable of being removably inserted in said profiled cavities (25), said profiled cavities (25) being accessible through a respective front aperture (28) of said column (11), which is adapted to be closed by a corresponding piece of closing wall (29) that is adapted to sit flush with the outer surface of the same column.

8. Section bar for support columns according to claim 7, **characterized in that** each profiled frame (30) is shaped so as to act as a sealing gasket of appropriate material, such as for instance rubber, which is fixed against said inner pole (18) by means of per sè known fastening means (31), has a grooved configuration and is provided with elastically pliable borders (32) to accomodate therebetween at least a component part, such as for instance a partition wall (33), for the sealed, ie. water-tight assembly thereof within said profiled frame (30).

9. Section bar for support columns according to claim 8, **characterized in that** said profiled support members (34) are used to support various items, such as for instance waste collection baskets (35) and/or road signs (36), advertising placards (37) and the like.

10. Section bar for support columns according to claim 9, **characterized in that** said elongated piece (16) is used to sustain structures of various shape and size in various arrangements thereof.
